# EUROPEAN PATENT SPECIFICATION

(11) **EP 3 943 977 B1**
(45) Date of publication and mention of the grant of the patent: **04.09.2024**
(21) Application number: 20186760.3
(22) Date of filing: 20.07.2020
(51) Int. Cl.: G01S 7/497, G01S 7/4865, G01S 7/481, G01S 17/10, G01S 17/894

(54) **APPARATUS COMPRISING A TIME-OF-FLIGHT SENSOR AND METHOD FOR CHARACTERIZING A TIME-OF-FLIGHT SENSOR**
VORRICHTUNG MIT EINEM LAUFZEITSENSOR UND VERFAHREN ZUR CHARAKTERISIERUNG EINES LAUFZEITSENSORS
APPAREIL COMPRENANT UN CAPTEUR DE DURÉE DE VOL ET PROCÉDÉ DE CARACTÉRISATION D'UN CAPTEUR DE DURÉE DE VOL

(43) Date of publication of application: 26.01.2022
(73) Proprietor: Infineon Technologies AG, 85579 Neubiberg (DE)
(72) Inventor: LOBNIK, Robert, 9135 Bad Eisenkappel (AT); PLANK, Hannes, 8010 Graz (AT); SCHOENLIEB, Armin, 8054 Seiersberg-Pirka (AT)
(74) Representative: 2SPL Patentanwälte PartG mbB

(56) References cited:
- EP-A1- 3 460 509
- WO-A1-2020/017491

## Description

### Field

The present disclosure relates to Time-of-Flight (ToF) sensing. In particular, examples relate to an apparatus comprising a ToF sensor and a method for characterizing a ToF sensor.

### Background

A ToF module is conventionally covered by a cover glass in order to protect the ToF module from the environment. An exemplary ToF system having a ToF sensor behind an optically transparent cover glass is proposed in document EP 3 460 509 A1. Difference values representing a respective time period between sending pulses and received pulses are binned into a histogram. A crosstalk response is determined within a predetermined range of bins in the histogram, and the histogram is calibrated using the crosstalk response. An output signal indicative of a ToF is generated based on an evaluation of the calibrated histogram.

Document WO 2020017491 A1 further proposes a LiDAR sensor unit using detection light to detect information relating to the outside of a vehicle. A light adjusting mirror is disposed in such a way as to cover a detecting surface of the LiDAR sensor unit.

Various characteristics such as temperature may influence the measurements of the ToF module.

Hence, there may be a demand for characterization of a ToF sensor.

### Summary

The demand may be satisfied by the subject matter of the appended claims.

An example relates to a method for characterizing a ToF sensor. The ToF sensor is covered by a cover exhibiting an adjustable transmittance. The method comprises selectively adjusting the transmittance of the cover such that the cover is opaque for light emittable by the ToF sensor. Further, the method comprises performing at least one ToF measurement with the ToF sensor while the cover is opaque for obtaining measurement data for light reflected from the cover back to the ToF sensor. The method additionally comprises determining characterization data based on the measurement data. The characterization data indicate a quantity related to the ToF sensor.

Another example relates to an apparatus comprising a ToF sensor. The apparatus further comprises a cover covering the ToF sensor and exhibiting an adjustable transmittance. Additionally, the apparatus comprises circuitry for adjusting the transmittance of the cover, wherein the circuitry is configured to selectively adjust the transmittance of the cover such that the cover is opaque for light emittable by the ToF sensor. The ToF sensor is configured to perform at least one ToF measurement while the cover is opaque for obtaining measurement data for light reflected from the cover back to the ToF sensor. In addition, the apparatus comprises a processing circuit configured to determine characterization data based on the measurement data. The characterization data indicate a quantity related to the ToF sensor.

### Brief description of the Figures

Some examples of apparatuses and/or methods will be described in the following by way of example only, and with reference to the accompanying figures, in which
Fig. 1 illustrates a flowchart of an example of a method for characterizing a ToF sensor; and
Fig. 2 illustrates an exemplary arrangement of a ToF sensor and a cover; and
Fig. 3 illustrates an example of an apparatus comprising a ToF sensor.

### Detailed Description

Various examples will now be described more fully with reference to the accompanying drawings in which some examples are illustrated. In the figures, the thicknesses of lines, layers and/or regions may be exaggerated for clarity.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a", "an" and "the" is used and using only a single element is neither explicitly nor implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises", "comprising", "includes" and/or "including", when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

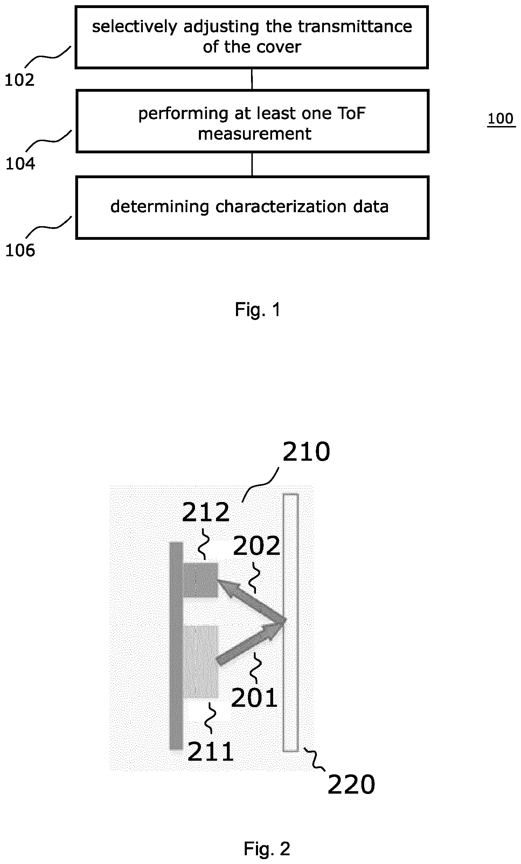

**Fig. 1** illustrates a flowchart of an example of a method 100 for characterizing a ToF sensor. The method 100 will be described in the following further with reference to **Fig. 2** which illustrates an exemplary arrangement of a ToF sensor 210 and a cover 220 covering the ToF sensor 210. The cover 220 protects the ToF sensor 210 from dust, moisture, dirt, etc.

The cover 220 exhibits an adjustable transmittance. In other words, the cover 220's effectiveness in transmitting radiant energy is adjustable (controllable, adaptable). In particular, the transmittance of the cover 200 may be adjusted such that the cover is opaque (blocking the passage of light) or (substantially) transparent for light emittable by the ToF sensor 210. That is, depending on the adjusted transmittance of the cover 220, light emitted by the ToF sensor 210 may transmit (pass) essentially completely through the cover 220 or be essentially completely reflected by the cover 220. In other words, the reflectivity of the cover 220 may be adjusted.

The cover 220 may, e.g., be made up of glass, plastics or any other suitable material. For example, the cover 220 may be an electrochromic device such as an electrochromic glass. Alternatively, the cover 220 may be a liquid crystal device such as a liquid crystal glass or a liquid crystal display. In other examples, the cover 220 may be an electrophoretic device such as an electrophoretic display (also known as "e-ink"). If the cover 220 is one of an electrochromic device, a liquid crystal device or an electrophoretic device, the transmittance of the cover may be controlled by applying a voltage to the cover 220. For example, a corresponding circuitry may be used for adjusting the transmittance of the cover 220. However, it is to be noted that the cover 220 is not limited to the above examples. The cover 220 may be any element that is capable of protecting the ToF sensor 210 from the surrounding environment and that exhibits an adjustable transmittance for light emitted by the ToF sensor 210. For example, the cover 220 may be a component of a mobile device (e.g. mobile phone, tablet computer, laptop computer) or an automotive ToF system.

The method 100 comprises selectively adjusting 102 the transmittance of the cover 220 such that the cover is opaque for light emittable by the ToF sensor 210. In other words, the transmittance of the cover 220 is selectively adjusted such that light emitted by the ToF sensor 210 is essentially completely reflected by the cover 220. As described above, the transmittance of the cover 220 may be adjusted by applying a voltage to the cover 220 (e.g. implemented as electrochromic device or liquid crystal device) in order adjust the transmittance of the cover 220 such that the cover 220 is opaque for light emittable by the ToF sensor 210.

The method 100 comprises performing 104 at least one ToF measurement with the ToF sensor 210 while the cover 220 is opaque for obtaining measurement data for light reflected from the cover 220 back to the ToF sensor 210. In general, any number of ToF measurements may be performed. For example, exactly one (i.e. a single) ToF measurement may be performed for obtaining the measurement data. In other examples, at least two, three, four or more ToF measurements may be performed while the cover 220 is opaque for obtaining the measurement data. In other words, the measurement data of the cover 220 comprises one or several frames. The at least one ToF measurement may comprise at least one Coded Modulation (CM) measurement, at least one Continuous Wave (CW) measurement or a combination of CM and CW measurements.

As can be seen from Fig. 2, light 201 is emitted by an illumination element 211 of the ToF sensor 210 in each ToF measurement. The illumination element 211 generates the light 201 based on an illumination signal exhibiting an alternating series of high and low pulses. For a CM measurement, the pulses may be of varying duration (length). Accordingly, the light 201 for a CM measurement may be a series of light pulses with varying pulse length and varying pulse spacing. For a CW measurement, the pulses are of equal duration (length). Accordingly, the light 201 for a CW measurement is a series of light pulses with equal pulse length and equal pulse spacing. For example, the illumination element 211 may comprise one or more Light-Emitting Diodes (LEDs) or one or more laser diodes (e.g. one or more Vertical-Cavity Surface-Emitting Lasers, VCSELs) which are fired based on the illumination signal.

The light 201 is reflected from the cover 220 back to the ToF sensor 210 while the cover 220 is opaque. In particular, the light 201 is reflected (at least in part) from the cover 220 towards a light capturing element 212 of the ToF sensor 210. The light 201 may be reflected at a surface of the cover 220 and/or inside (within) the cover 220 while the cover 220 is opaque. The reflected light is denoted by the reference sign 202 in Fig. 2. Typically, the illumination element 211 and the light capturing element 212 are arranged in a common cavity that is (at least partly) covered by the cover 220 in order to protect the ToF sensor 210 from dust, moisture, dirt, etc.

The reflected light 202 arrives at the ToF sensor 210 without leaving the module while the cover 220 is opaque. The light capturing element 212 measures the reflected light 202. The light capturing element 212 may comprise various components such as e.g. optics (e.g. one or more lenses) and electronic circuitry. For example, the electronic circuitry may comprise an image sensor comprising a plurality of photo-sensitive elements or pixels (e.g. each comprising a Photonic Mixer Device, PMD) and driver electronics for the image sensor. All or only selected elements/pixels of the plurality of photo-sensitive elements/pixels may be used for measuring the reflected light 202. A reference signal is used for driving the electronic circuitry of the light capturing element 212 (e.g. the photo-sensitive elements or pixels) for measuring the reflected light 202. Similarly to what is described above for the illumination signal used for driving the illumination element 211, the reference signal exhibits an alternating series of high and low pulses. For a CM measurement, the pulses are of varying duration (length). For a CW measurement, the pulses are of equal duration (length). It is to be noted that the illumination signal and the reference signal used for a ToF measurement may be identical, time-shifted (phase-shifted) with respect to each and/or be different from each other. Further, if more than one ToF measurement is performed, different illumination signals and/or reference signals may be used for the individual ToF measurements.

In some examples, an illumination signal exhibiting an alternating series of high and low pulses of equal duration (length) may alternatively be used for a CM measurement together with a reference signal exhibiting an alternating series of high and low pulses of varying duration (length). Irrespective of the shape of the illumination signal and the reference signal, a correlation function of the ToF sensor 210 may be a periodic sinusoidal function without gaps for a CW measurement, and be a function that is substantially zero for one or more predetermined distance ranges for a CM measurement. The respective correlation function illustrates (indicates) the expected output of the ToF sensor 210 for the CW or the CM measurement depending on the distance between the ToF sensor 210 and an object reflecting the light of the ToF sensor 210.

The ToF sensor 210 generates and outputs measurement data based on the light arriving at the light capturing element 212. Since the transmittance of the cover 220 is adjusted such that the cover 220 is opaque for light emittable by the ToF sensor 210 during the at least one ToF measurement, the light 201 emitted by the ToF sensor 210 is substantially completely reflected by the cover 220 back to the ToF sensor 210. Accordingly, (substantially) only light reflected from the cover 220 back to the ToF sensor 210 arrives at the light capturing element 212. Therefore, measurement data for (of) light reflected from the cover 220 back to the ToF sensor 210 is obtained for the at least one ToF measurement.

The method 100 additionally comprises determining 106 characterization data based on the measurement data for the light reflected from the cover 220 back to the ToF sensor 210. The characterization data indicate a quantity related to the ToF sensor 210.

The cover 220 is a known object at a known, fixed distance to the ToF sensor 210. Accordingly, the light path of the light 201 to the cover 220 and back to the ToF sensor 210 has a fixed distance. Further, the transmittance of the cover 220 is adjusted to a known transmittance and, hence, reflectivity. Taking into account the knowledge about the cover 220, the reflected light 202 arriving at the light capturing element 212 from the cover 220 allows to characterize ToF sensor 210. Hence, the method 100 may allow to characterize the ToF sensor 210 by means of the characterization data derived from the measurement data for light reflected from the cover 220 back to the ToF sensor 210 while the cover 220 is opaque.

The characterization data may be of various types and may indicate various quantities related to the ToF sensor. In the following, some exemplary types of characterization data will be described in detail. However, it is to be noted that the present disclosure is not limited to the examples described in the following.

According to some examples, the characterization data indicate a distance error correction value for correcting distance values determined based on ToF measurements performed by the ToF sensor 210 while the transmittance of the cover 220 is adjusted such that the cover 220 is transparent for light emittable by the ToF sensor 210. ToF sensors such as the ToF sensor 210 conventionally suffer from a distance (depth) measurement error (offset), which may depend on various factors such as a temperature or aging. For example, the generation of the illumination signal and the driver electronics operation is temperature dependent. Accordingly, the temperature may affect the indirect light path over the cover 220. The distance measurement error is to be compensated in order to obtain correct distance (depth) measurement results. As described in the following, the known path distance between the cover 220 and the ToF sensor 210 and the obtained measurement data enable to correct for this error.

To obtain the distance error correction value, determining 104 the characterization data comprises determining a measured distance of the cover 220 to the ToF sensor 210 based on the measurement data. In other words, the distance of the cover 220 to the ToF sensor 210 is measured via the at least one ToF measurement while the cover is opaque. Further, determining 104 the characterization data comprises determining the distance error correction value based on a comparison of the measured distance of the cover 220 to the ToF sensor 210 to the known distance of the cover 220 to the ToF sensor 210. By comparing the measured distance of the cover 220 to the ToF sensor 210 to the known distance of the cover 220 to the ToF sensor 210, a discrepancy between the measured distance of the cover 220 to the ToF sensor 210 and the actual distance of the cover 220 to the ToF sensor 210 may be determined and the distance error correction value may be derived therefrom.

Assuming that a distance value is indicating a distance of the ToF sensor 210 to an object in a scene (not illustrated in Fig. 2) sensed by the ToF sensor 210 is determined based on one or more ToF measurements performed by ToF sensor 210 while the transmittance of the cover 220 is adjusted such that the cover 220 is transparent for light emittable by the ToF sensor 210, the method 100 may further comprise correcting the distance value using the determined distance error correction value. For example, the distance error correction value may be a distance error correction offset which is added to or subtracted from the distance value, or the distance error correction value may be a factor which is multiplied with the distance value. Accordingly, the distance value suffering from the distance measurement error of the ToF sensor 210 may be corrected in order to provide an error corrected distance value.

For example, if the light capturing element 212 comprises a plurality of photo-sensitive elements or pixels, a respective distance error correction value may be determined for each or at least part of the plurality of photo-sensitive elements or pixels. In other words, the distance error correction value may be calculated based on a pixel-by-pixel basis.

As described above, there is a temperature-depended depth measurement error in ToF sensors/systems. It is to be noted that temperature is one major contribution to the error among others. In order to compensate for it, one may conduct a reference measurement which solely depends on this offset. A reference measurement however needs a lightpath of a known distance, which does not change with the sensed scene. For example, if a ToF camera of a mobile device is covered by an electrochromic glass, the electrochromic effect may be used as described above to reflect ToF light pulses back into the ToF sensor. Since the transmittance of the electrochromic glass can be changed by applying a voltage, the reflectivity of the electrochromic glass can be changed. If the electrochromic glass is transparent, it is possible to conduct any kind of ToF measurement. If the transmittance of the electrochromic glass is decreased, light from the illumination unit of the ToF sensor is reflected by the electrochromic glass. This light directly travels to the ToF sensor. Since the distance between the ToF sensor and the electrochromic glass is constant, the resulting images can be used for error correction of ToF data. In other words, for correcting this error, a depth image with opaque cover glass may be captured using the same processing pipeline as normal ToF sensing. For example, the measured distance may then be subtracted from the normal ToF measurement and the known distance (glass to ToF sensor) may then be added. That is, a distance error correction value is effectively added to the normal ToF measurement. The exposure time of the reference measurement can be different from the actual exposure time.

In other examples, the characterization data indicate a measured output power of the illumination element 211. The output power of the illumination element 211 may depend on various factors such as temperature or aging. The transmittance and, hence, the reflectivity of the cover 220 is adjusted to a predefined value. Accordingly, the reflected light 202 arriving at the light capturing element 212 is proportional to the output power of the illumination element 211. Optionally, the output power of the illumination element 211 may be measured using a dedicated photodiode of the ToF sensor for measuring the reflected light 202.

For example, if the output power of the illumination element 211 is drifting due to temperature variations, the drift in output power may be measured and be used as an input of a control system (controller) of the illumination element 211 in order to regulate the emitted optical power. Accordingly, a constant optical power output of the illumination element 211 may be achieved. For example, a constant optical power output of the illumination element 211 for different temperatures may be achieved. In other words, the method 100 may comprise controlling the output power of the illumination element 211 based on the characterization data. For example, the illumination signal for controlling the illumination element 211 may be generated based on the characterization data according to the method 100. By varying the illumination signal based on the characterization data, the output power of the illumination element 211 may be controlled. Similarly, regulation of the driving current of the illumination element 211, duty cycle adaptation, pulse skipping or exposure time adaptation may be performed based on the characterization data in order to achieve a (substantially) constant average output power of the illumination element 211. For example, a control algorithm for controlling light emission by the illumination element 211 may receive the characterization data as input. Similarly, a current supplied to the illumination element 211 may be adjusted based on the characterization data.

In case the illumination element 211 comprises more than one light source (e.g. an LED or a VCSEL), the method 100 may be applied for each of the light sources separately in order to measure the output power of the light sources of the illumination element 211 separately. Accordingly, each of the light sources of the illumination element 211 may be controlled individually based on the respective measured output power.

Similar to what is described above for the characterization data indicating the distance error correction value, the characterization data indicating the measured output power of the illumination element 211 may be used for calibrating any kind of two-dimensional images the ToF sensor 210 produces. Speaking more generally, the method 100 may comprise modifying, based on the characterization data, image data of an image determined based on ToF measurements performed by the ToF sensor 210 while the transmittance of the cover 220 is adjusted such that the cover is transparent for light emittable by the ToF sensor 220.

In further examples, the characterization data indicate a status of at least one photo-sensitive element or pixel of the light capturing element 212. Since the transmittance and, hence, the reflectivity of the cover 220 is adjusted to a predefined value, the power of the reflected light 202 arriving at the light capturing element 212 is substantially known. Accordingly, the reflected light 202 arriving from the opaque cover 220 at the light capturing element 212 may be used for self-testing in order to identify photo-sensitive elements or pixels which are not working correctly.

For example, determining 106 the characterization data may comprise comparing the measurement data to reference data. The reference data indicate an expected output of the light capturing element 212 or individual photo-sensitive elements or pixels of the light capturing element 212. Accordingly, determining 106 the characterization data may further comprise determining the status of the at least one photo-sensitive element or pixel of the light capturing element 212 based on the comparison of the measurement data to reference data. For example, if a deviation of the measurement data to the reference data is above a threshold (i.e. the deviation is too large), it may be determined that the at least one photo-sensitive element or pixel of the light capturing element 212 is malfunctioning. On the other hand, if the deviation of the measurement data to the reference data is below a threshold (i.e. the deviation is small enough), it may be determined that the at least one photo-sensitive element or pixel of the light capturing element 212 is functioning correctly. If it is determined that a photo-sensitive element or pixel of the light capturing element 212 is malfunctioning, an error message may, e.g., be output or the malfunctioning photo-sensitive element or pixel of the light capturing element 212 may be omitted in future ToF measurements.

The status may be determined for all photo-sensitive elements or pixels of the light capturing element 211 according to some examples. In other examples, the status may be determined for only a sub-set of all photo-sensitive elements or pixels of the light capturing element 211. For example, the status may be determined only for the photo-sensitive elements or pixels of the light capturing element 211 to be used for a subsequent capture of a sequence of ToF measurements for obtaining an image of a scene.

As described above for various examples, placing a ToF sensor behind a cover with adjustable transmittance (e.g. an electrochromic cover glass) and changing the transmittance of the cover may allow to conduct a reference measurement for error-calibration or self test.

In some examples, the at least one ToF measurement for obtaining the measurement data may be performed sporadically, i.e. independent from image capture by the ToF sensor 210. For example, the at least one ToF measurement for obtaining the measurement data may be performed after predefined time-interval lapses (i.e. in regular intervals).

In other examples, the at least one ToF measurement for obtaining the measurement data may be performed during or before image capture with the ToF sensor 210. The at least one ToF measurement for obtaining the measurement data may, e.g., be performed in a sequence of ToF measurements for obtaining an image of a scene. For example, if the determined characterization data indicate a distance error correction value as described above, a distance value determined based on the sequence of ToF measurements may be corrected using the distance error correction value in the process of obtaining the image of the scene. Similarly, if the characterization data indicate a measured output power of the illumination element 211, the output power of the illumination element 211 during the sequence of ToF measurements may be controlled based on the measured output power in order to achieve a (substantially) constant average output power of the illumination element 211 during the sequence of ToF measurements. The at least one ToF measurement for obtaining the measurement data may be performed at an arbitrary position in the sequence of ToF measurements for obtaining the image of the scene. Alternatively, the at least one ToF measurement for obtaining the measurement data may be performed prior to capturing the sequence of ToF measurements for obtaining the image of the scene.

In other words, the ToF sensor may perform a reference measurement before it is used in an application, while it is used in an application or in regular intervals. The cover 220 (e.g. an electrochromic glass) is controlled accordingly.

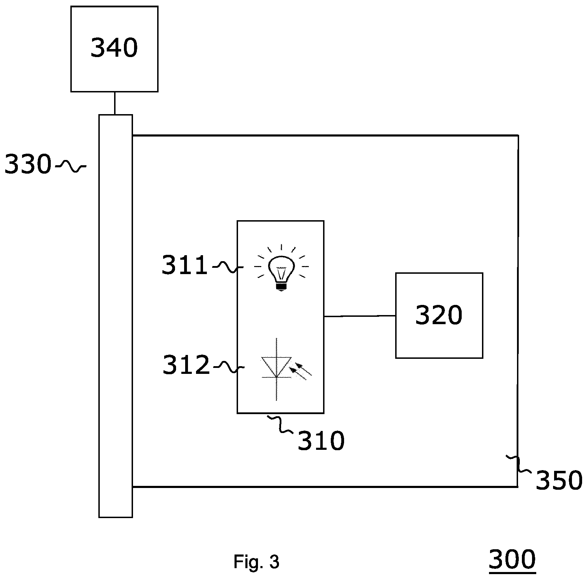

An example of an apparatus 300 according to the proposed technique is further illustrated in **Fig. 3****.** The apparatus 300 comprises a ToF sensor 310. The ToF sensor 310 comprises an illumination element 311 and a light capturing element 312 for performing ToF measurements according to the above described technique. The illumination element 311 and the light capturing element 312 are arranged in a common cavity 350 that is (at least in part) covered by a cover 330. The cover 330 (e.g. an electrochromic device or a liquid crystal device) exhibits an adjustable transmittance.

The apparatus 300 comprises (adjustment) circuitry 340 for adjusting the transmittance of the cover 330. In particular, the circuitry 340 is configured to selectively adjust the transmittance of the cover 300 such that the cover is opaque for light emittable by the ToF sensor 310. For example, if the cover 330 is an electrochromic device (glass) or a liquid crystal device (glass), the circuitry 340 may be configured to adjust the transmittance of the cover 330 such that the cover 330 is opaque for light emittable by the ToF sensor 310 by applying a voltage to the electrochromic device or the liquid crystal device.

The ToF sensor 310 is configured to perform at least one ToF measurement while the cover 330 is opaque for obtaining measurement data for light reflected from the cover 330 back to the ToF sensor 310.

Further, the apparatus 300 comprises a processing circuit 320. For example, the processing circuit 320 may be a single dedicated processor, a single shared processor, or a plurality of individual processors, some of which or all of which may be shared, a digital signal processor (DSP) hardware, an application specific integrated circuit (ASIC) or a field programmable gate array (FPGA). The processing circuit 320 may optionally be coupled to, e.g., read only memory (ROM) for storing software, random access memory (RAM) and/or non-volatile memory. The processing circuit 320 is configured to perform processing according to the above described technique. In particular, the processing circuit 320 is configured to determine characterization data based on the measurement data. The characterization data indicate a quantity related to the ToF sensor 310.

Although illustrated as separate elements in Fig. 3, functionalities of the processing circuit 320 and the circuitry 340 may be implemented in a single circuitry according to alternative examples.

The apparatus 300 may comprise further hardware - conventional and/or custom. For example, the apparatus 300 may be a mobile device (e.g. mobile phone, tablet computer, laptop computer) or an automotive ToF system.

The examples as described herein may be summarized as follows:
Some examples relate to a method for characterizing a ToF sensor. The ToF sensor is covered by a cover exhibiting an adjustable transmittance. The method comprises selectively adjusting the transmittance of the cover such that the cover is opaque for light emittable by the ToF sensor. Further, the method comprises performing at least one ToF measurement with the ToF sensor while the cover is opaque for obtaining measurement data for light reflected from the cover back to the ToF sensor. The method additionally comprises determining characterization data based on the measurement data. The characterization data indicate a quantity related to the ToF sensor.

According to some examples, an illumination element of the ToF sensor for emitting the light and a light capturing element of the ToF sensor for measuring the light reflected from the cover are arranged in a common cavity that is covered by the cover.

In some examples, the method further comprises modifying, based on the characterization data, image data of an image determined based on ToF measurements performed by the ToF sensor while the transmittance of the cover is adjusted such that the cover is transparent for light emittable by the ToF sensor.

According to some examples, the characterization data indicate a distance error correction value for correcting distance values determined based on ToF measurements performed by the ToF sensor.

In some examples, determining the characterization data comprises: determining a measured distance of the cover to the ToF sensor based on the measurement data; and determining the distance error correction value based on a comparison of the measured distance of the cover to the ToF sensor to a known distance of the cover to the ToF sensor.

According to some examples, the method further comprises correcting, using the distance error correction value, a distance value indicating a distance of the ToF sensor to an object in a scene sensed by the ToF sensor, wherein the distance value is determined based on ToF measurements performed by the ToF sensor while the transmittance of the cover is adjusted such that the cover is transparent for light emittable by the ToF sensor.

In some examples, the characterization data indicate a measured output power of an illumination element of the ToF sensor for emitting the light.

According to some examples, the method further comprises controlling an output power of the illumination element based on the characterization data.

In some examples, the characterization data indicate a status of at least one photo-sensitive element of a light capturing element of the ToF sensor.

According to some examples, determining the characterization data comprises: comparing the measurement data to reference data; and determining the status of the at least one photo-sensitive element of the light capturing element based on the comparison of the measurement data to reference data.

In some examples, determining the status of the at least one photo-sensitive element of the light capturing element comprises determining that the at least one photo-sensitive element is malfunctioning if a deviation of the measurement data to the reference data is above a threshold.

According to some examples, the at least one ToF measurement for obtaining the measurement data is performed after a predefined time-interval lapses. Alternatively, the at least one ToF measurement for obtaining the measurement data is performed in a sequence of ToF measurements for obtaining an image of a scene. Further alternatively, the at least one ToF measurement for obtaining the measurement data is performed prior to capturing the sequence of ToF measurements for obtaining the image of the scene.

In some examples, the cover is an electrochromic device or a liquid crystal device, wherein adjusting the transmittance of the cover such that the cover is opaque for light emittable by the ToF sensor comprises applying a voltage to the electrochromic device or the liquid crystal device in order adjust the transmittance of the electrochromic device or the liquid crystal device such that the electrochromic device or the liquid crystal device is opaque for light emittable by the ToF sensor.

Other examples relate to an apparatus comprising a ToF sensor. The apparatus further comprises a cover covering the ToF sensor and exhibiting an adjustable transmittance. Additionally, the apparatus comprises circuitry for adjusting the transmittance of the cover, wherein the circuitry is configured to selectively adjust the transmittance of the cover such that the cover is opaque for light emittable by the ToF sensor. The ToF sensor is configured to perform at least one ToF measurement while the cover is opaque for obtaining measurement data for light reflected from the cover back to the ToF sensor. In addition, the apparatus comprises a processing circuit configured to determine characterization data based on the measurement data. The characterization data indicate a quantity related to the ToF sensor.

According to some examples, the cover is an electrochromic device or a liquid crystal device, wherein the circuitry is configured to adjust the transmittance of the cover such that the cover is opaque for light emittable by the ToF sensor by applying a voltage to the electrochromic device or the liquid crystal device.

Examples of the present disclosure may enable ToF reference measurements using an electrochromic cover glass.

The aspects and features mentioned and described together with one or more of the previously detailed examples and figures, may as well be combined with one or more of the other examples in order to replace a like feature of the other example or in order to additionally introduce the feature to the other example.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

## Claims

1. A method (100) for characterizing a time-of-flight sensor, wherein the time-of-flight sensor is covered by a cover exhibiting an adjustable transmittance, the method comprising:
selectively adjusting (102) the transmittance of the cover such that the cover is opaque for light emittable by the time-of-flight sensor;
performing (104) at least one time-of-flight measurement with the time-of-flight sensor while the cover is opaque for obtaining measurement data for light reflected from the cover back to the time-of-flight sensor; and
determining (106) characterization data based on the measurement data, wherein the characterization data indicate a quantity related to the time-of-flight sensor.

2. The method of claim 1, wherein an illumination element of the time-of-flight sensor for emitting the light and a light capturing element of the time-of-flight sensor for measuring the light reflected from the cover are arranged in a common cavity that is covered by the cover.

3. The method of claim 1 or claim 2, further comprising:
modifying, based on the characterization data, image data of an image determined based on time-of-flight measurements performed by the time-of-flight sensor while the transmittance of the cover is adjusted such that the cover is transparent for light emittable by the time-of-flight sensor.

4. The method of any of claims 1 to 3, wherein the characterization data indicate a distance error correction value for correcting distance values determined based on time-of-flight measurements performed by the time-of-flight sensor.

5. The method of claim 4, wherein determining (106) the characterization data comprises:
determining a measured distance of the cover to the time-of-flight sensor based on the measurement data; and
determining the distance error correction value based on a comparison of the measured distance of the cover to the time-of-flight sensor to a known distance of the cover to the time-of-flight sensor.

6. The method of claim 4 or claim 5, further comprising:
correcting, using the distance error correction value, a distance value indicating a distance of the time-of-flight sensor to an object in a scene sensed by the time-of-flight sensor, wherein the distance value is determined based on time-of-flight measurements performed by the time-of flight sensor while the transmittance of the cover is adjusted such that the cover is transparent for light emittable by the time-of-flight sensor.

7. The method of any of claims 1 to 3, wherein the characterization data indicate a measured output power of an illumination element of the time-of-flight sensor for emitting the light.

8. The method of claim 7, further comprising:
controlling an output power of the illumination element based on the characterization data.

9. The method of claim 1 or claim 2, wherein the characterization data indicate a status of at least one photo-sensitive element of a light capturing element of the time-of-flight sensor.

10. The method of claim 9, wherein determining (106) the characterization data comprises:
comparing the measurement data to reference data; and
determining the status of the at least one photo-sensitive element of the light capturing element based on the comparison of the measurement data to reference data.

11. The method of claim 10, wherein determining the status of the at least one photo-sensitive element of the light capturing element comprises:
determining that the at least one photo-sensitive element is malfunctioning if a deviation of the measurement data to the reference data is above a threshold.

12. The method of any of claims 1 to 11, wherein the at least one time-of-flight measurement for obtaining the measurement data is performed after a predefined time-interval lapses, wherein the at least one time-of-flight measurement for obtaining the measurement data is performed in a sequence of time-of-flight measurements for obtaining an image of a scene, or wherein the at least one time-of-flight measurement for obtaining the measurement data is performed prior to capturing the sequence of time-of-flight measurements for obtaining the image of the scene.

13. The method of any of claims 1 to 12, wherein the cover is an electrochromic device or a liquid crystal device, and wherein adjusting the transmittance of the cover such that the cover is opaque for light emittable by the time-of-flight sensor comprises:
applying a voltage to the electrochromic device or the liquid crystal device in order adjust the transmittance of the electrochromic device or the liquid crystal device such that the electrochromic device or the liquid crystal device is opaque for light emittable by the time-of-flight sensor.

14. An apparatus (300), comprising:
a time-of-flight sensor (310);
a cover (330) covering the time-of-flight sensor (310) and exhibiting an adjustable transmittance;
circuitry (340) for adjusting the transmittance of the cover (330), wherein the circuitry (340) is configured to selectively adjust the transmittance of the cover (330) such that the cover (330) is opaque for light emittable by the time-of-flight sensor (310),
wherein the time-of-flight sensor (310) is configured to perform at least one time-of-flight measurement while the cover (330) is opaque for obtaining measurement data for light reflected from the cover (330) back to the time-of-flight sensor (310); and
a processing circuit (320) configured to determine characterization data based on the measurement data, wherein the characterization data indicate a quantity related to the time-of-flight sensor (310).

15. The apparatus of claim 14, wherein the cover (330) is an electrochromic device or a liquid crystal device, and wherein the circuitry (340) is configured to adjust the transmittance of the cover (330) such that the cover (330) is opaque for light emittable by the time-of-flight sensor (310) by applying a voltage to the electrochromic device or the liquid crystal device.

## Patentansprüche

1. Ein Verfahren (100) zum Charakterisieren eines Laufzeitsensors, wobei der Laufzeitsensor durch eine Abdeckung bedeckt ist, die einen einstellbaren Transmissionsgrad aufweist, wobei das Verfahren Folgendes umfasst:
selektives Einstellen (102) des Transmissionsgrads der Abdeckung, derart, dass die Abdeckung für Licht, das durch den Laufzeitsensor emittierbar ist, opak ist;
Durchführen (104) zumindest einer Laufzeitmessung mit dem Laufzeitsensor, während die Abdeckung opak ist, um Messdaten für Licht zu erhalten, das von der Abdeckung zurück zu dem Laufzeitsensor reflektiert wird; und
Bestimmen (106) von Charakterisierungsdaten basierend auf den Messdaten, wobei die Charakterisierungsdaten eine Größe bezogen auf den Laufzeitsensor anzeigen.

2. Das Verfahren nach Anspruch 1, wobei ein Beleuchtungselement des Laufzeitsensors zum Emittieren des Lichts und ein Lichterfassungselement des Laufzeitsensors zum Messen des Lichts, das von der Abdeckung reflektiert wird, in einem gemeinsamen Hohlraum angeordnet sind, der durch die Abdeckung bedeckt ist.

3. Das Verfahren nach Anspruch 1 oder Anspruch 2, das ferner Folgendes umfasst:
Modifizieren, basierend auf den Charakterisierungsdaten, von Bilddaten eines Bilds, das basierend auf Laufzeitmessungen bestimmt wird, die durch den Laufzeitsensor durchgeführt werden, während der Transmissionsgrad der Abdeckung derart eingestellt wird, dass die Abdeckung für Licht, das durch den Laufzeitsensor emittierbar ist, transparent ist.

4. Das Verfahren nach einem der Ansprüche 1 bis 3, wobei die Charakterisierungsdaten einen Abstandsfehlerkorrekturwert zum Korrigieren von Abstandswerten anzeigen, die basierend auf Laufzeitmessungen bestimmt werden, die durch den Laufzeitsensor durchgeführt werden.

5. Das Verfahren nach Anspruch 4, wobei das Bestimmen (106) der Charakterisierungsdaten umfasst:
Bestimmen eines gemessenen Abstands der Abdeckung zu dem Laufzeitsensor basierend auf den Messdaten; und
Bestimmen des Abstandsfehlerkorrekturwerts basierend auf einem Vergleich des gemessenen Abstands der Abdeckung zu dem Laufzeitsensor mit einem bekannten Abstand der Abdeckung zu dem Laufzeitsensor.

6. Das Verfahren nach Anspruch 4 oder Anspruch 5, das ferner Folgendes umfasst:
Korrigieren, unter Verwendung des Abstandsfehlerkorrekturwerts, eines Abstandswerts, der einen Abstand des Laufzeitsensors zu einem Objekt in einer Szene anzeigt, die durch den Laufzeitsensor erfasst wird, wobei der Abstandswert basierend auf Laufzeitmessungen bestimmt wird, die durch den Laufzeitsensor durchgeführt werden, während der Transmissionsgrad der Abdeckung derart eingestellt wird, dass die Abdeckung für Licht, das durch den Laufzeitsensor emittierbar ist, transparent ist.

7. Das Verfahren nach einem der Ansprüche 1 bis 3, wobei die Charakterisierungsdaten eine gemessene Ausgangsleistung eines Beleuchtungselements des Laufzeitsensors zum Emittieren des Lichts anzeigen.

8. Das Verfahren nach Anspruch 7, das ferner Folgendes umfasst:
Steuern einer Ausgangsleistung des Beleuchtungselements basierend auf den Charakterisierungsdaten.

9. Das Verfahren nach Anspruch 1 oder Anspruch 2, wobei die Charakterisierungsdaten einen Status von zumindest einem lichtempfindlichen Element eines Lichterfassungselements des Laufzeitsensors anzeigen.

10. Das Verfahren nach Anspruch 9, wobei das Bestimmen (106) der Charakterisierungsdaten umfasst:
Vergleichen der Messdaten mit Referenzdaten; und
Bestimmen des Status des zumindest einen lichtempfindlichen Elements des Lichterfassungselements basierend auf dem Vergleich der Messdaten mit Referenzdaten.

11. Das Verfahren nach Anspruch 10, wobei das Bestimmen des Status des zumindest einen lichtempfindlichen Elements des Lichterfassungselements umfasst:
Bestimmen, dass das zumindest eine lichtempfindliche Element eine Fehlfunktion aufweist, wenn eine Abweichung der Messdaten von den Referenzdaten über einem Schwellenwert liegt.

12. Das Verfahren nach einem der Ansprüche 1 bis 11, wobei die zumindest eine Laufzeitmessung zum Erhalten der Messdaten durchgeführt wird, nachdem ein vordefiniertes Zeitintervall verstrichen ist, wobei die zumindest eine Laufzeitmessung zum Erhalten der Messdaten in einer Sequenz von Laufzeitmessungen zum Erhalten eines Bilds einer Szene durchgeführt wird, oder wobei die zumindest eine Laufzeitmessung zum Erhalten der Messdaten vor dem Erfassen der Sequenz von Laufzeitmessungen zum Erhalten des Bilds der Szene durchgeführt wird.

13. Das Verfahren nach einem der Ansprüche 1 bis 12, wobei die Abdeckung eine elektrochrome Vorrichtung oder eine Flüssigkristallvorrichtung ist, und wobei das Einstellen des Transmissionsgrads der Abdeckung, derart, dass die Abdeckung für Licht, das durch den Laufzeitsensor emittierbar ist, opak ist, umfasst:
Anlegen einer Spannung an die elektrochrome Vorrichtung oder die Flüssigkristallvorrichtung, um den Transmissionsgrad der elektrochromen Vorrichtung oder der Flüssigkristallvorrichtung derart einzustellen, dass die elektrochrome Vorrichtung oder die Flüssigkristallvorrichtung für Licht, das durch den Laufzeitsensor emittierbar ist, opak ist.

14. Eine Vorrichtung (300), die Folgendes umfasst:
einen Laufzeitsensor (310);
eine Abdeckung (330), die den Laufzeitsensor (310) bedeckt und einen einstellbaren Transmissionsgrad aufweist;
eine Schaltungsanordnung (340) zum Einstellen des Transmissionsgrads der Abdeckung (330), wobei die Schaltungsanordnung (340) ausgebildet ist, um den Transmissionsgrad der Abdeckung (330) derart selektiv einzustellen, dass die Abdeckung (330) für Licht, das durch den Laufzeitsensor (310) emittierbar ist, opak ist,
wobei der Laufzeitsensor (310) ausgebildet ist, um zumindest eine Laufzeitmessung durchzuführen, während die Abdeckung (330) opak ist, um Messdaten für Licht zu erhalten, das von der Abdeckung (330) zurück zu dem Laufzeitsensor (310) reflektiert wird; und
eine Verarbeitungsschaltung (320), die ausgebildet ist, um Charakterisierungsdaten basierend auf den Messdaten zu bestimmen, wobei die Charakterisierungsdaten eine Größe bezogen auf den Laufzeitsensor (310) anzeigen.

15. Die Vorrichtung nach Anspruch 14, wobei die Abdeckung (330) eine elektrochrome Vorrichtung oder eine Flüssigkristallvorrichtung ist, und wobei die Schaltungsanordnung (340) ausgebildet ist, um den Transmissionsgrad der Abdeckung (330) derart einzustellen, dass die Abdeckung (330) für Licht, das durch den Laufzeitsensor (310) emittierbar ist, opak ist, indem eine Spannung an die elektrochrome Vorrichtung oder die Flüssigkristallvorrichtung angelegt wird.

## Revendications

1. Procédé (100) de caractérisation d'un capteur de temps de vol, dans lequel le capteur de temps de vol est recouvert par un couvercle présentant une transmittance ajustable, le procédé comprenant le fait de :
ajuster sélectivement (102) la transmittance du couvercle de telle sorte que le couvercle est opaque à la lumière pouvant être émise par le capteur de temps de vol ;
effectuer (104) au moins une mesure de temps de vol avec le capteur de temps de vol alors que le couvercle est opaque pour obtenir des données de mesure pour la lumière réfléchie par le couvercle en retour vers le capteur de temps de vol ; et
déterminer (106) des données de caractérisation sur la base des données de mesure, dans lequel les données de caractérisation indiquent une quantité liée au capteur de temps de vol.

2. Procédé selon la revendication 1, dans lequel un élément d'éclairage du capteur de temps de vol pour émettre la lumière et un élément de capture de lumière du capteur de temps de vol pour mesurer la lumière réfléchie par le couvercle sont agencés dans une cavité commune qui est recouverte par le couvercle.

3. Procédé selon la revendication 1 ou la revendication 2, comprenant en outre le fait de :
modifier, sur la base des données de caractérisation, des données d'image d'une image déterminée sur la base de mesures de temps de vol effectuées par le capteur de temps de vol alors que la transmittance du couvercle est ajustée de telle sorte que le couvercle est transparent à la lumière pouvant être émise par le capteur de temps de vol.

4. Procédé selon l'une quelconque des revendications 1 à 3, dans lequel les données de caractérisation indiquent une valeur de correction d'erreur de distance pour corriger des valeurs de distance déterminées sur la base de mesures de temps de vol effectuées par le capteur de temps de vol.

5. Procédé selon la revendication 4, dans lequel le fait de déterminer (106) les données de caractérisation comprend le fait de :
déterminer une distance mesurée du couvercle au capteur de temps de vol sur la base des données de mesure ; et
déterminer la valeur de correction d'erreur de distance sur la base d'une comparaison de la distance mesurée du couvercle au capteur de temps de vol à une distance connue du couvercle au capteur de temps de vol.

6. Procédé selon la revendication 4 ou la revendication 5, comprenant en outre le fait de :
corriger, en utilisant la valeur de correction d'erreur de distance, une valeur de distance indiquant une distance du capteur de temps de vol à un objet dans une scène capté par le capteur de temps de vol, dans lequel la valeur de distance est déterminée sur la base de mesures de temps de vol effectuées par le capteur de temps de vol alors que la transmittance du couvercle est ajustée de telle sorte que le couvercle est transparent à la lumière pouvant être émise par le capteur de temps de vol.

7. Procédé selon l'une quelconque des revendications 1 à 3, dans lequel les données de caractérisation indiquent une puissance de sortie mesurée d'un élément d'éclairage du capteur de temps de vol pour émettre la lumière.

8. Procédé selon la revendication 7, comprenant en outre le fait de :
commander une puissance de sortie de l'élément d'éclairage sur la base des données de caractérisation.

9. Procédé selon la revendication 1 ou la revendication 2, dans lequel les données de caractérisation indiquent un état d'au moins un élément photosensible d'un élément de capture de lumière du capteur de temps de vol.

10. Procédé selon la revendication 9, dans lequel le fait de déterminer (106) les données de caractérisation comprend le fait de :
comparer les données de mesure à des données de référence ; et
déterminer l'état de l'au moins un élément photosensible de l'élément de capture de lumière sur la base de la comparaison des données de mesure à des données de référence.

11. Procédé selon la revendication 10, dans lequel le fait de déterminer l'état de l'au moins un élément photosensible de l'élément de capture de lumière comprend le fait de :
déterminer que l'au moins un élément photosensible fonctionne mal si un écart des données de mesure par rapport aux données de référence est supérieur à un seuil.

12. Procédé selon l'une quelconque des revendications 1 à 11, dans lequel l'au moins une mesure de temps de vol pour obtenir les données de mesure est effectuée après qu'un intervalle de temps prédéfini s'est écoulé, dans lequel l'au moins une mesure de temps de vol pour obtenir les données de mesure est effectuée dans une séquence de mesures de temps de vol pour obtenir une image d'une scène, ou dans lequel l'au moins une mesure de temps de vol pour obtenir les données de mesure est effectuée avant de capturer la séquence de mesures de temps de vol pour obtenir l'image de la scène.

13. Procédé selon l'une quelconque des revendications 1 à 12, dans lequel le couvercle est un dispositif électrochromique ou un dispositif à cristaux liquides, et dans lequel le fait d'ajuster la transmittance du couvercle de telle sorte que le couvercle est opaque à la lumière pouvant être émise par le capteur de temps de vol comprend le fait de :
appliquer une tension au dispositif électrochromique ou au dispositif à cristaux liquides afin d'ajuster la transmittance du dispositif électrochromique ou du dispositif à cristaux liquides de telle sorte que le dispositif électrochromique ou le dispositif à cristaux liquides est opaque à la lumière pouvant être émise par le capteur de temps de vol.

14. Appareil (300), comprenant :
un capteur de temps de vol (310) ;
un couvercle (330) recouvrant le capteur de temps de vol (310) et présentant une transmittance ajustable ;
une circuiterie (340) pour ajuster la transmittance du couvercle (330), dans lequel la circuiterie (340) est configurée pour ajuster sélectivement la transmittance du couvercle (330) de telle sorte que le couvercle (330) est opaque à la lumière pouvant être émise par le capteur de temps de vol (310),
dans lequel le capteur de temps de vol (310) est configuré pour effectuer au moins une mesure de temps de vol alors que le couvercle (330) est opaque pour obtenir des données de mesure pour la lumière réfléchie par le couvercle (330) en retour vers le capteur de temps de vol (310) ; et
un circuit de traitement (320) configuré pour déterminer des données de caractérisation sur la base des données de mesure, dans lequel les données de caractérisation indiquent une quantité liée au capteur de temps de vol (310).

15. Appareil selon la revendication 14, dans lequel le couvercle (330) est un dispositif électrochromique ou un dispositif à cristaux liquides, et dans lequel la circuiterie (340) est configurée pour ajuster la transmittance du couvercle (330) de telle sorte que le couvercle (330) est opaque à la lumière pouvant être émise par le capteur de temps de vol (310) en appliquant une tension au dispositif électrochromique ou au dispositif à cristaux liquides.
